# EUROPEAN PATENT SPECIFICATION

(11) **EP 2 762 369 B1**
(45) Date of publication and mention of the grant of the patent: **23.11.2016**
(21) Application number: 13154076.7
(22) Date of filing: 05.02.2013
(51) Int. Cl.: B60S 1/40, B60S 1/38

(54) **Wiper connection seat**
Wischeranschlusssitz
Siège de connexion d'essuie-glace

(43) Date of publication of application: 06.08.2014
(73) Proprietor: Scan Top Enterprise Co. Ltd., Taipei City 110 (TW)
(72) Inventor: Yang, Chih-Ming, 110 Xinyi Dist. Taipei City (TW); Chang, Chuan-Chih, 110 Xinyi Dist. Taipei City (TW)
(74) Representative: 2K Patentanwälte Blasberg Kewitz & Reichel

(56) References cited:
- DE-A1-102010 030 880
- FR-A1- 2 838 693
- US-A1- 2010 050 361
- US-A1- 2013 007 976
- US-B1- 6 625 842

## Description

### FIELD OF THE INVENTION

The present invention relates to a wiper connection seat, in particular to the wiper connection seat applicable for wiper arms for vehicles of different specifications.

### BACKGROUND OF THE INVENTION

In a conventional wiper structure for vehicles, a connection seat is used for coupling a wiper arm and a wiper, and the conventional connection seat generally comes with two clasp slots, one for clasping a pivot shaft of the wiper and the other for clasping an insert pin of the wiper arm to mount the wiper onto the wiper arm. Therefore, the conventional wiper connection seat can only be connected to the wiper and wiper arm of a particular specification and the scope of the applicability is very narrow. If it is necessary to replace a wiper or a wiper arm, the connection seat of the particular specification must be changed at the same time, thus resulting in an inconvenient maintenance and a high manufacturing cost.

DE 10 2010 030 880 A1 discloses a wiper connection seat for coupling a wiper arm and a wiper according to the preamble of claim 1. The wiper has a coupling member having a pin. The main body is coupled with an adapter, which has a sleeve. For coupling the wiper arm and the wiper, the pin of the coupling member of the wiper is inserted in the sleeve of the adapter to thereby couple the wiper arm and the wiper. After insertion of the pin into the sleeve, a cover of the adapter is pivoted to thereby encase the coupling region of the wiper connection seat. The main body also has a snap groove for snapping an axle of the wiper therein. The snapping action is different and the snap groove is represented by the sleeve which cooperates with the rest of the main body to snap the axle.

US 6,625,842 B1 discloses a further wiper connection seat. However, the sleeve portion and the main body are made as an integral piece. The main body does not comprise a snap groove for snapping an axle of the wiper.

### SUMMARY OF THE INVENTION

It is an object of the present invention to further enhance such a wiper connection seat so that it is applicable for wiper arms of different specifications and enabling a quick and reliable coupling of the wiper arm and the wiper.

This problem is solved by a wiper connection seat according to claim 1. Further advantageous embodiments are the subject-matter of the dependent claims.

A wiper connection seat for coupling a wiper arm and a wiper of the present invention comprises: a main body, a sleeve and a pressing member. The main body has a containing groove; the sleeve is installed in the containing groove and has a pivoting groove for pivotally coupling the wiper connection seat to the wiper arm; and the pressing member is pivotally coupled to the main body and covered onto the pivoting groove. The main body has a snap groove for snapping an axle of the wiper therein. According to the present invention the sleeve has a tenon protruded from an external side of the sleeve, wherein the containing groove has a snap opening formed on an inner wall of the containing groove, and the tenon is snapped into the snap opening to fix the sleeve into the containing groove.

In the wiper connection seat of the present invention, the main body preferably includes a first pivoting portion, and the pressing member includes a second pivoting portion, wherein the first pivoting portion is pivotally coupled to the second pivoting portion.

In the wiper connection seat of the present invention, the main body is preferably a protruding column, and the second pivoting portion is preferably a slot.

In the wiper connection seat of the present invention, the first pivoting portion is preferably a slot, and the second pivoting portion is preferably a protruding column.

In the wiper connection seat of the present invention, the pressing member preferably includes a cleat, and a flange convexly formed at a position of the main body and corresponding to the cleat and coupled with the cleat.

In the wiper connection seat of the present invention, the pressing member preferably includes a cover plate provided for covering the containing groove.

In the wiper connection seat of the present invention, the sleeve includes a stop block for stopping the wiper arm from falling out from the pivoting groove and abutting the wiper arms. In the wiper connection seat of the present invention, the stop block is protruded from an inner wall of the pivoting groove.

In the wiper connection seat of the present invention, the separately installed sleeve is pivotally coupled to the wiper arm axle, so that the wiper connection seat can fit wiper arms of different specifications by simply changing the sleeve, and the drawbacks of the prior art can be overcome effectively.

### BRIEF DESCRIPTION OF THE DRAWINGS

- FIG. 1: is a first exploded view of a wiper connection seat of a preferred embodiment of the present invention;
- FIG. 2: is a second exploded view of a wiper connection seat of a preferred embodiment of the present invention;
- FIG. 3: is a perspective view of a wiper connection seat of a preferred embodiment of the present invention;
- FIG. 4: is a cross-sectional view of a wiper connection seat of a preferred embodiment of the present invention;
- FIG. 5: is a first schematic view of an operation status of a wiper connection seat of a preferred embodiment of the present invention;
- FIG. 6: is a cross-sectional view of an operation status of a wiper connection seat of a preferred embodiment of the present invention; and
- FIG. 7: is a second schematic view of an operation status of a wiper connection seat of a preferred embodiment of the present invention.

### DESCRIPTION OF THE PREFERRED EMBODIMENTS

The technical contents of the present invention will become apparent with the detailed description of preferred embodiments accompanied with the illustration of related drawings as follows.

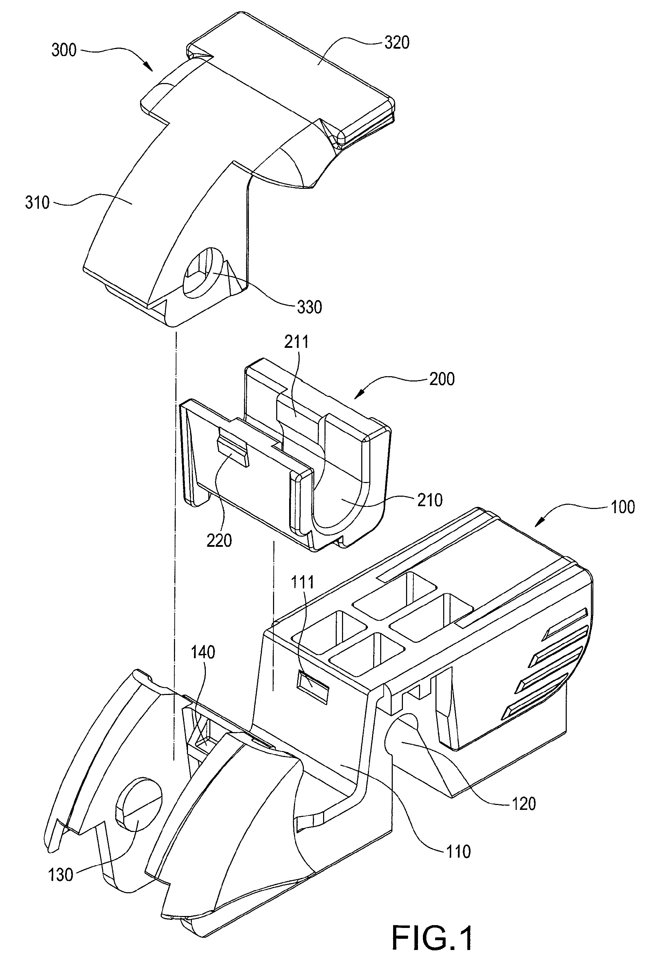

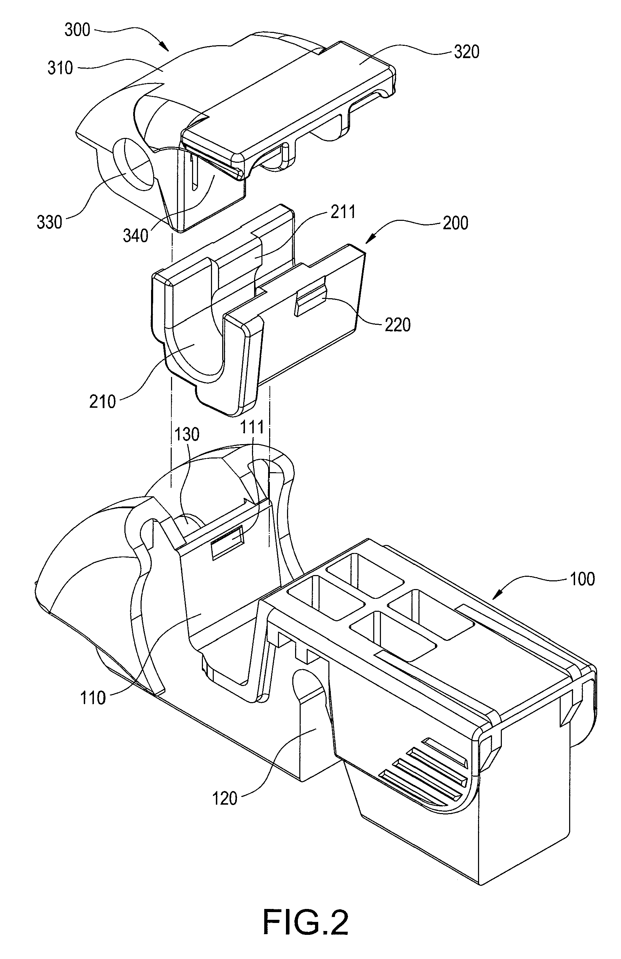

With reference to FIGS. 1 and 2 for a wiper connection seat in accordance with a preferred embodiment of the present invention, the wiper connection seat is used for connecting a wiper arm of a vehicle and a wiper and comprises a main body 100, a sleeve 200 and a pressing member 300.

The main body 100 has a containing groove 110, a snap groove 120, two first pivoting portions 130 disposed opposite to each other, and a flange 140. The containing groove 110 has at least one snap opening 111 formed on an inner wall of the containing groove 110. Preferably, the containing groove 110 has two snap openings 111 formed on an inner wall of the containing groove 110 of this preferred embodiment, and the snap grooves 20 are configured for snapping the wiper therein. In this preferred embodiment, the snap groove 120 and the containing groove 110 are preferably arranged opposite to each other, but the present invention is not limited to such a specific arrangement only. The flange 140 is preferably disposed between the two first pivoting portions 130, but the present invention is not limited to such a specific arrangement only.

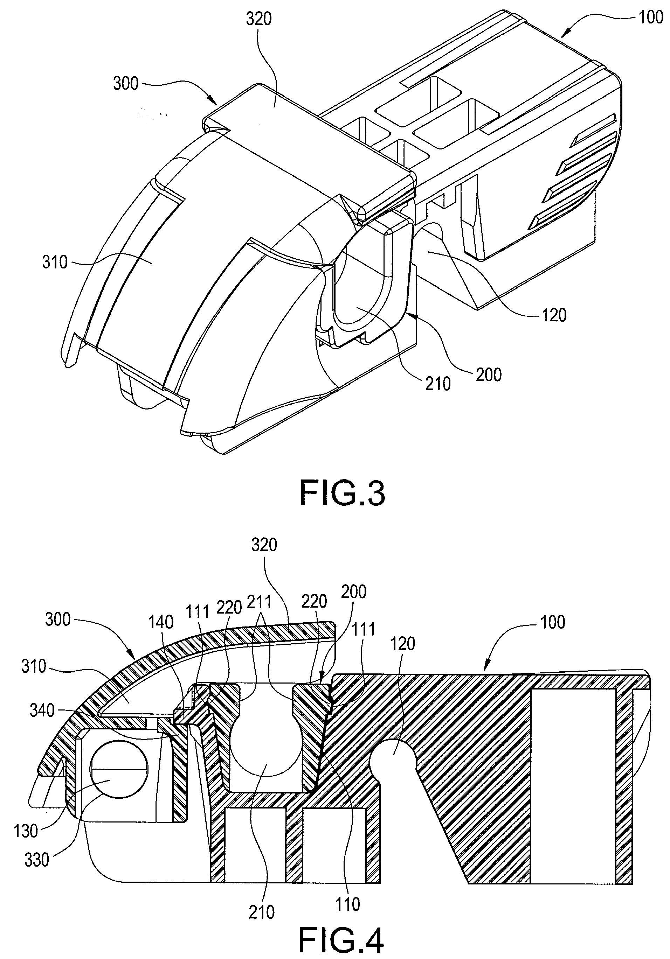

As shown in FIGS. 3 and 4, the sleeve 200 is installed in the containing groove 110, and the sleeve 200 is a socket with a substantially C-shaped cross-section, and the sleeve 200 has a pivoting groove 210 formed thereon, which is configured for pivotally coupling the wiper arm. The sleeve 200 includes a stop block 211 disposed thereon for stopping the wiper arm from falling out from the pivoting groove 210. The stop block 211 is protruded from an inner wall of the pivoting groove 210, but the present invention is not limited to such a specific arrangement only. At least one tenon 220 is protruded from an external side of the sleeve 200. In this preferred embodiment, there are two tenons 220 protruded from the external side of the sleeve 200, and each being installed at a position corresponding to a snap opening 111 and snapped into the corresponding snap opening 111 to fix the sleeve 200 into the containing groove 110.

The pressing member 300 is pivotally coupled to the main body 100 and covered onto the pivoting groove 210, and the pressing member 300 includes a rotating shaft 310 and a cover plate 320 extended from the rotating shaft 310, wherein the rotating shaft 310 is pivotally coupled to the main body 100. and the rotating shaft 310 has two second pivoting portions 330 disposed opposite to each other and a cleat 340, and each second pivoting portion 330 is disposed corresponding to a first pivoting portion 130, and each first pivoting portion 130 is pivotally coupled to the corresponding second pivoting portion 330, such that the pressing member 300 can be rotably coupled to the main body 100. However, the corresponding first and second pivoting portions 130, 330 of the present invention are not limited to the aforementioned specific forms only, but the first pivoting portion 130 can be a protruding column and the corresponding pivotally coupled second pivoting portion 330 can be a slot; or the first pivoting portion 130 can be a slot, and the corresponding pivotally coupled second pivoting portion 330 can be a protruding column. The cleat 340 is disposed at a position corresponding to the flange 140 and can be moved flexibly and installed between the two second pivoting portions 330, but the present invention is not limited to such arrangement only. The flange 140 is snapped into the cleat 340 to fix the pressing member 300 with a rotation angle with respect to the main body 100, so as to cover the cover plate 320 onto the pivoting groove 210. In addition, the cover plate 320 can be opened by the rotating shaft 310.

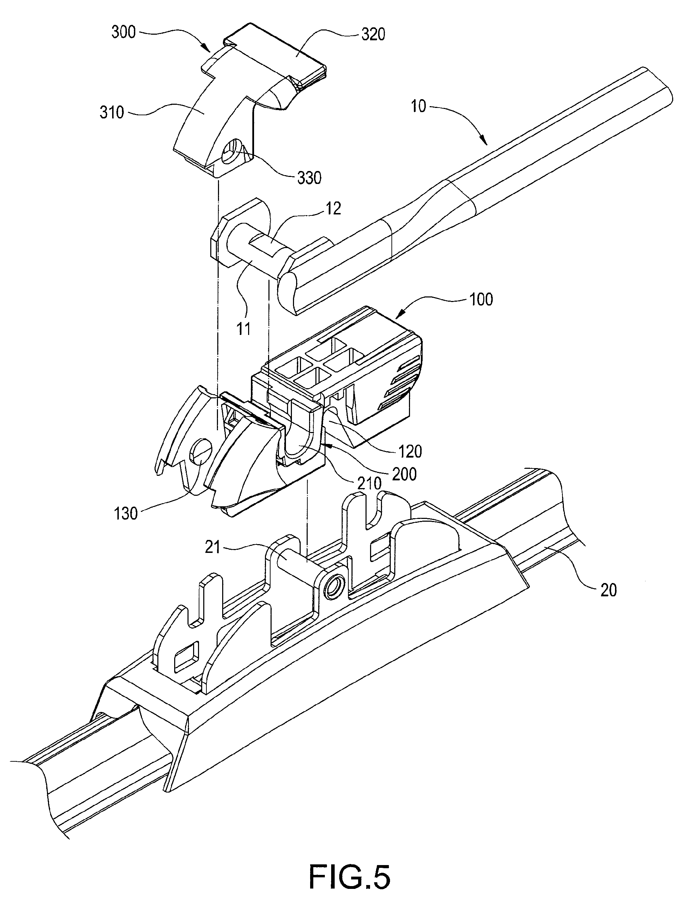

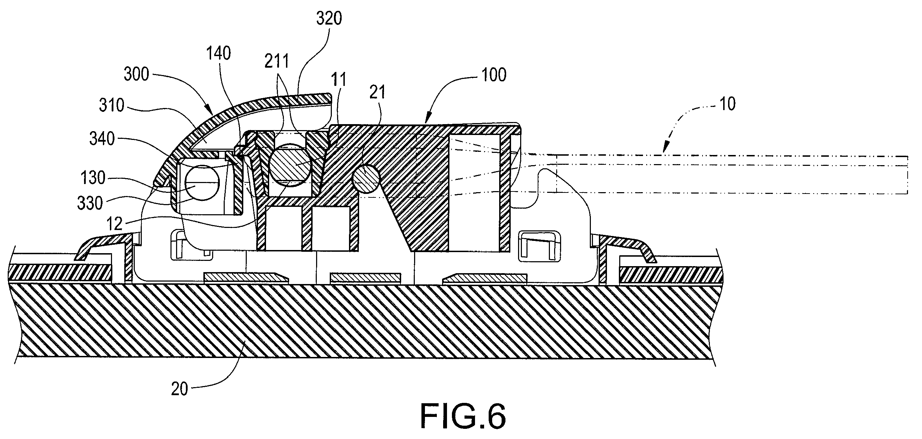

As shown in FIGS. 5 and 6, the wiper connection seat of the present invention is pivotally coupled to the wiper arm 10 by the sleeve 200, wherein the sleeve 200 is preferably pivotally coupled to the wiper arm axle 11 of the wiper arm 10, and the sleeve 200 further has a pivoting groove 210 with a different internal diameter to fit a wiper arm axle 11 of the different diameter. The wiper arm axle 11 has two guide slots 12, such that when the wiper arm axle 11 is aligned at a specific angle with respect to the sleeve 200, the stop block 211 in the pivoting groove 210 can be passed through the guide slot 12 to facilitate the installation of the wiper arm axle 11 into the pivoting groove 210. After the wiper arm axle 11 is installed into the pivoting groove 210 and rotated to the aforementioned specific angle, the wiper arm axle 11 is fixed into the pivoting groove 210 by the stop block 211. In addition, the cover plate 320 of the pressing member 300 is covered onto the containing groove 110 to prevent the wiper arm axle 11 from falling out from the pivoting groove 210. The snap groove 120 is provided for snapping a wiper axle 21 of the wiper 20, wherein the wiper connection seat of the present invention is provided for coupling the wiper arm 10 and the wiper 20.

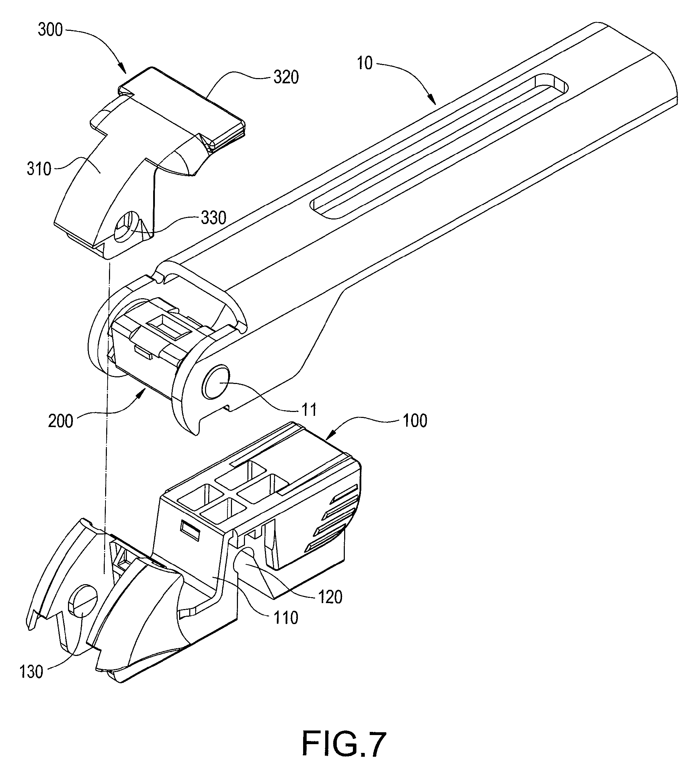

As shown in FIG. 7, the containing groove 110 can be in a shape corresponding to another shape of the wiper arm axle 11 in order to connect a non-pivotally connected wiper arm axle 11 (such as the built-in wiper arm axle 11 of the sleeve 200 as shown in FIG. 7), so that when the sleeve 200 is removed from the containing groove 110, the containing groove 110 can be used for connecting a wiper arm axle 11 of a particular specification.

Since the wiper connection seat of the present invention is pivotally coupled to the wiper arm 10 by the sleeve 200, therefore the wiper connection seat can fit wiper arms 10 of various different specifications by simply changing the sleeve 200 with a different internal diameter.

Compared with the prior art, the present invention provides a wider scope of applicability, and the invention can fit different wiper arms by simply changing the sleeve 200 without the need of designing the connection seat with another specification. With the design of replacing the sleeve 200, the position of the pivoting groove 210 remains unchanged, so that when a wiper arm 10 of a different specification is changed, the relative positions of the wiper arm 10 and the wiper 20 will not affect the overall operation.

## Claims

1. A wiper connection seat for coupling a wiper arm (10) and a wiper (20), comprising:
a main body (100) having a containing groove (110);
a sleeve (200), installed in the containing groove (110) and having a pivoting groove (210) for pivotally coupling the wiper connection seat to said wiper arm (10); and
a pressing member (300), pivotally coupled to the main body (100) and covered onto the pivoting groove (210); wherein
the main body (100) has a snap groove (120) for snapping an axle (21) of the wiper (20) therein,
**characterized in that** the sleeve (200) has a tenon (220) protruded from an external side of the sleeve (200), wherein the containing groove (110) has a snap opening (111) formed on an inner wall of the containing groove (110), and the tenon (220) is snapped into the snap opening (111) to fix the sleeve (200) into the containing groove (110).

2. The wiper connection seat of claim 1, wherein the main body (100) comprises a first pivoting portion (130) and the pressing member (300) comprises a second pivoting portion (330), and the first pivoting portion (130) is pivotally coupled to the second pivoting portion (330).

3. The wiper connection seat of claim 2, wherein the first pivoting portion (130) is a protruding column and the second pivoting portion (330) is a slot.

4. The wiper connection seat of claim 2, wherein the first pivoting portion (130) is a slot and the second pivoting portion (330) is a protruding column.

5. The wiper connection seat of any of the preceding claims, wherein the pressing member (300) comprises a cleat (340), and the main body (100) has a flange (140) protruded from a position corresponding to the cleat (340) and coupled to the cleat (340).

6. The wiper connection seat of any of the preceding claims, wherein the pressing member (300) comprises a cover plate (320) covered onto the pivoting groove (210).

7. The wiper connection seat of any of the preceding claims, wherein the sleeve (200) has a stop block (211) disposed thereon and provided for stopping the wiper arm (10) from falling out from the pivoting groove (210) and abutting the wiper arm (10).

8. The wiper connection seat of claim 7, wherein the stop block (211) is protruded from an inner wall of the pivoting groove (210).

## Patentansprüche

1. Wischer-Verbindungsaufnahme zum Verbinden eines Wischerarms (10) und eines Wischers (20), umfassend:
einen Hauptkörper (100), der eine Aufnahmenut (110) aufweist;
eine Hülse (200), die in der Aufnahmenut (110) angeordnet ist und eine Drehlager-Aussparung (210) aufweist, um die Wischer-Verbindungsaufnahme drehbeweglich mit dem Wischerarm (10) zu verbinden; und
ein Druck-Glied (300), das drehbar mit dem Hauptkörper (100) verbunden ist und von der Drehlager-Aussparung (210) überdeckt ist; wobei
der Hauptkörper (100) eine Schnapp-Nut (120) aufweist, um eine Ache (21) des Wischers (20) darin einzurasten,
**dadurch gekennzeichnet, dass** die Hülse (200) einen Zapfen (220) aufweist, der von einer Außenseite der Hülse (200) vorsteht, wobei die Aufnahmenut (110) eine Schnapp-Öffnung (111) aufweist, die auf einer Innenwand der Aufnahmenut (110) ausgebildet ist, und wobei der Zapfen (220) in die Schnapp-Öffnung (111) eingerastet ist, um die Hülse (200) in der Aufnahmenut (110) festzusetzen.

2. Wischer-Verbindungsaufnahme nach Anspruch 1, wobei der Hauptkörper (100) einen ersten Dreh-Abschnitt (130) umfasst und wobei das Druck-Glied (300) einen zweiten Dreh-Abschnitt (330) umfasst, und wobei der erste Dreh-Abschnitt (130) drehbar mit dem zweiten Dreh-Abschnitt (330) verbunden ist.

3. Wischer-Verbindungsaufnahme nach Anspruch 1, wobei der erste Dreh-Abschnitt (130) eine hervorstehende Säule ist und wobei der zweite Dreh-Abschnitt (330) eine Aussparung ist.

4. Wischer-Verbindungsaufnahme nach Anspruch 2, wobei der erste Dreh-Abschnitt (130) eine Aussparung ist und wobei der zweite Dreh-Abschnitt (330) eine hervorstehende Säule ist.

5. Wischer-Verbindungsaufnahme nach einem der vorherigen Ansprüche, wobei das Druck-Glied (300) eine Leiste (340) umfasst, und wobei der Hauptkörper (100) einen Flansch (140) aufweist, der von einer Position in Zuordnung zu der Leiste (340) vorsteht und mit der Leiste (340) verbunden ist.

6. Wischer-Verbindungsaufnahme nach einem der vorherigen Ansprüche, wobei das Druck-Glied (300) eine Abdeckplatte (320) umfasst, die die Drehlager-Aussparung (210) abdeckt.

7. Wischer-Verbindungsaufnahme nach einem der vorherigen Ansprüche, wobei die Hülse (200) einen Anschlag-Block (211) aufweist, der auf dieser angeordnet ist und bereitgestellt ist, um den Wischerarm (10) vom Herausfallen- bzw. rutschen aus der Drehlager-Aussparung (210) abzuhalten, und um gegen den Wischerarm (10) zu drücken.

8. Wischer-Verbindungsaufnahme nach Anspruch 7, wobei der Anschlag-Block (211) von einer Innenwand der Drehlager-Aussparung (210) vorsteht.

## Revendications

1. Un siège de connexion d'essuie-glace pour le couplage d'un bras d'essuie-glace (10) et un essuie-glace (20), comprenant :
un corps principal (100), comportant une rainure de logement (110);
un manchon (200), installé dans la rainure de logement (110) et ayant une rainure de pivotement (210) pour coupler de façon pivotante le siège de connexion d'essuie-glace audit bras d'essuie-glace (10); et
un élément de pression (300), couplé de façon pivotante au corps principal (100) et recouvert sur la rainure de pivotement (210) ; dans lequel
le corps principal (100) présente un rainure d'accrochage (120) pour l'accrochage d'un axe (21) de l'essuie-glace (20) en son sein,
**caractérisé en ce que** le manchon (200) présente un tenon (220) en saillie depuis un côté externe du manchon (200), dans lequel la rainure de logement (110) présente une ouverture d'accrochage (111) formée sur une paroi intérieure de la rainure de logement (111), et le tenon (220) est accroché à l'intérieur de l'ouverture d'accrochage (111) pour fixer le manchon (200) à l'intérieur de la rainure de logement (110).

2. Le siège de connexion d'essuie-glace de la revendication 1, dans lequel le corps principal (100) comprend une première partie pivotante (130) et l'élément de pression (300) comprend une seconde partie pivotante (330) et la première partie pivotante (130) est couplée de manière pivotante à la seconde partie pivotante (330).

3. Le siège de connexion d'essuie-glace de la revendication 2, dans lequel la première partie pivotante (130) est une colonne faisant saillie et la deuxième partie pivotante (330) est une fente.

4. Le siège de connexion d'essuie-glace selon la revendication 2, dans lequel la première partie pivotante (130) est une fente et la deuxième partie pivotante (330) est une colonne en saillie.

5. Le siège de connexion d'essuie-glace selon l'une des revendications précédentes, dans lequel l'élément de pression (300) comprend un taquet (340) et le corps principal (100) comporte une bride (140) faisant saillie à partir d'une position correspondant au taquet (340), et couplé au taquet (340).

6. Le siège de connexion d'essuie-glace selon l'une des revendications précédentes, dans lequel l'élément de pression (300) comprend une plaque de recouvrement (320) recouverte sur la rainure de pivotement (210).

7. Le siège de connexion d'essuie-glace selon l'une des revendications précédentes, dans lequel le manchon (200) comporte un bloc d'arrêt (211) disposé sur celui-ci et prévu pour arrêter le bras d'essuie-glace (10) de tomber hors de la rainure de pivotement (210) et butant contre le bras d'essuie-glace (10).

8. Le siège de connexion d'essuie-glace selon la revendication 7, dans lequel le bloc de butée (211) fait saillie depuis une paroi interne de la rainure de pivotement (210).
